# EUROPÄISCHE PATENTSCHRIFT

(11) **EP 0 773 428 B1**
(45) Veröffentlichungstag und Bekanntmachung des Hinweises auf die Patenterteilung: **24.02.1999**
(21) Anmeldenummer: 96117051.1
(22) Anmeldetag: 24.10.1996
(51) Int. Cl.: G01C 15/02, A63C 19/06

(54) **Einrichtung zur Festlegung eines Messpunktes in einem Gelände**
Device for making a measuring point in terrain
Dispositif pour marquer un point de mesure dans un terrain

(30) Priorität: 08.11.1995 DE 29517654 U
(43) Veröffentlichungstag der Anmeldung: 14.05.1997
(73) Patentinhaber: Kühne, Gisbert, 90765 Fürth/Sack (DE)
(72) Erfinder: Kühne, Gisbert, 90765 Fürth/Sack (DE)
(74) Vertreter: LOUIS, PÖHLAU, LOHRENTZ & SEGETH

(56) Entgegenhaltungen:
- DE-A- 4 131 295
- DE-U- 7 343 049
- US-A- 3 042 161
- US-A- 3 066 769
- US-A- 4 682 910

## Beschreibung

Die Erfindung betrifft eine Einrichtung zur Festlegung eines Kreisbogens um einen Meßpunkt oder einer von dem Meßpunkt ausgehenden Geraden in einem Gelände.

Eine solche Einrichtung zur Festlegung eines Meßpunktes ist üblicherweise einfach als Stab ausgebildet, der in den Geländeboden eingeschlagen oder einbetoniert wird (siehe z.B. US-A-3 042 161). Ein derartiger Stab wird nur bis zu einer bestimmten Tiefe in den Geländeboden eingebracht, d.h. ein bestimmter Abschnitt des Stabes steht aus dem Geländeboden vor, um an diesem Abschnitt eine Schnur o.dgl. befestigen zu können. Mit dieser Schnur ist es dann möglich, um den durch den Stab gebildeten Meßpunkt im Gelände einen gewünschten Kreisbogen oder von dem Meßpunkt ausgehend zu einem zweiten Meßpunkt eine Gerade festzulegen. Diese als Stäbe ausgebildeten Einrichtungen der eingangs genannten Art können jedoch nicht im Gelände verbleiben, weil durch den aus dem Geländeboden herausragenden Abschnitt der stabförmigen Einrichtungen eine Verletzungsgefahr gegeben ist.

Das ist insbes. dann der Fall, wenn solche stabförmigen Einrichtungen auf Sportplätzen wie Fußballfeldern, Golfplätzen, Hockeyplätzen o.dgl. zum Einsatz gelangen. Zur Vermeidung einer solchen Verletzungsgefahr ist es also erforderlich, den Stab bzw. die Stäbe nach der Durchführung der entsprechenden Markierungsarbeiten aus dem Geländeboden wieder zu entfernen. Das bedingt einen nicht zu vernachlässigenden Arbeitsaufwand. Das bedeutet jedoch, daß es bei einer solchen bekannten Einrichtung erforderlich ist, diese im Bedarfsfall immer wieder in den entsprechenden Geländeboden einzubringen. Auch das bedeutet einen nicht zu vernachlässigenden Aufwand.

Aus der US-A 1 164 909 ist ein Straßenpfosten bekannt, der ein Rohr aufweist, von dessen unterem Endabschnitt ein Ansatz radial wegsteht. In der Straße ist eine Hülse vorgesehen, die mit einer Bajonett-Rille ausgebildet ist, in welche der besagte Ansatz hineinsteht. Am anderen Ende des Rohres ist eine Kappe festschraubbar bzw. festgeschraubt, von welcher ein Verkehrsschild o.dgl. nach oben wegsteht.

Die US-A 2 610 502 offenbart eine Markiereinrichtung, die ein in einer Hülse verschiebbares Rohr aufweist. Die Hülse ist in einem Geländeboden angebracht, der unter der Hülse mit einem Hohlraum versehen sein muß. Der Hohlraum dient zur Aufnahme des Rohres, wenn sich dieses in seiner in den Geländeboden versenkten Stellung befindet. Das Rohr ist aus dem Geländeboden herausziehbar und an der Hülse festlegbar. Zu diesem Zwecke ist die Hülse mit einer Rille und das Rohr mit einer in die Rille hineinstehenden Bajonett-Ansatz ausgebildet.

Aus der US-A 3 066 769 ist eine stabartige Einrichtung der eingangs genannten Art bekannt, die vorder- bzw. unterseitig mit einer eine Keilschneide bildenden Abplattung versehen ist, um die Einrichtung kraftsparend in einen Geländeboden einschlagen zu können. Von der Abplattung beabstandet ist die Einrichtung mit Rippen versehen, durch die ein ungewolltes Lösen bzw. Herausziehen der Einrichtung aus dem Boden zumindest erschwert wird.

Die DE-U 1 949 723 offenbart einen Pfahl aus einem Rohr und einer Bodenhülse, der insbes. als Träger von Wäscheleinen vorgesehen ist. Die Bodenhülse weist zur Begrenzung des herausnehmbar eingesteckten Pfahles eine radial einwärts geprägte Vertiefung als inneren Vorsprung auf. Das Pfahlende besitzt einen randoffenen und den Vorsprung seitlich umgreifenden Ausschnitt.

Die DE-U 7 343 049 beschreibt einen Bodenanker, der insbes. für auf dem Erdboden abgestellte Spielgeräte vorgesehen ist. Dieser bekannte Bodenanker weist ein Rohr auf, dessen Rohrwand entlang eines Teiles seiner Länge aufeinandergepreßt und durch einen Einschnitt in zwei Flansche unterteilt ist, die voneinander weggespreizt sind.

Aus der DE-U 84 04 216 ist eine Vorrichtung zur lösbaren Befestigung von Gegenständen auf einem sie tragenden Boden, insbes. von Sportgeräten auf dem Boden von Sportanlagen, bekannt. Diese bekannte Vorrichtung besteht aus einem in den Boden einzulassenden und im Boden zu verankernden Behälter mit einem bündig mit der Bodenoberfläche abschließenden Deckel. Im Inneren des Behälters ist ein vorgespanntes Verankerungsteil vorgesehen, das nach der Abnahme des Deckels gegen eine entsprechende Rückführungsspannung aus dem Behälter herausziehbar und am Gegenstand befestigbar ist.

Die CH-A 674 872 beschreibt eine Befestigungsvorrichtung für eine im Boden eingesetzte Stange oder Säule, welche sich aus einer im Boden eingelassenen rohrförmigen Bodenhülse und einem die Bodenhülse umgebenden Verankerungsteller zusammensetzt. Der Verankerungsteller weist eine die Bodenhülse aufnehmende zentrische Öffnung auf und ist gegenüber der Bodenhülse höhenverschiebbar vorgesehen. Die Bodenhülse ist mit mindestens einem am Außenumfang vorstehend angeordneten Wulst versehen, der mindestens teilweise einen Durchmesser besitzt, der größer als der Durchmesser der Öffnung des Verankerungstellers ist.

Aus der GB-A 2 254 349 ist eine Befestigungsvorrichtung für eine Stange bekannt, welche ein Gehäuse mit einer Kreisöffnung zur Aufnahme des unteren Endabschnittes der Stange sowie eine zur besagten Öffnung benachbarte Kammer aufweist. Ein Bolzen erstreckt sich von der Kammer in die Öffnung, um die Stange in der Öffnung lösbar festzulegen. Der Bolzen weist einen Kopf auf, der in der Kammer zu Betätigungszwecken zugänglich vorgesehen ist. Die Kammer kann durch einen Deckel verschlossen sein, um eine unzulässige Lösung der Stange aus der Öffnung zu verhindern.

Die DE-A 41 31 295 beschreibt eine Vorrichtung zur höhenverstellbaren Halterung eines Richtmittels wie einer Schnur oder einer Schiene. Die Vorrichtung umfaßt einen Stab und eine auf dem Stab verschiebbare Hülse mit einer Gewindebohrung, einer in die Gewindebohrung eingeschraubten Feststellschraube und einem an der Hülse angebrachten Halter für das Richtmittel. Die Vorrichtung erleichtert das Anlegen geneigter Bodenflächen oder das Ausgleichen geneigter Böden, Decken und Wände beim Aufbringen von Estrichen bzw. beim Anbringen von Verkleidungen, Holzdecken o.dgl.

Der Erfindung liegt die Aufgabe zugrunde, eine Einrichtung der eingangs genannten Art zu schaffen, welche die oben erwähnten Mängel nicht aufweist, d.h. welche im entsprechenden Geländeboden verbleiben kann, so daß der entsprechende Aufwand zur Entfernung der Einrichtung aus dem Geländeboden bzw. zur Einbringung der Einrichtung in den Geländeboden eliminiert ist, wobei eine Verletzungsgefahr ausgeschlossen ist.

Diese Aufgabe wird durch eine Einrichtung mit den Merkmalen des Anspruchs 1 gelöst. Bevorzugte Aus- bzw. Weiterbildungen der erfindungsgemäßen Einrichtung sind in den Unteransprüchen gekennzeichnet.

Die erfindungsgemäße Einrichtung wird in den entsprechenden Geländeboden eingebracht und kann dann im Geländeboden verbleiben. Das bedeutet eine erhebliche Reduktion des entsprechenden Arbeitsaufwandes im Vergleich mit bekannten Einrichtungen der gattungsgemäßen Art, die nur während der entsprechenden Arbeiten im Geländeboden verbleiben und danach wieder aus dem Geländeboden entfernt werden müssen. Durch das am Bodenankerelement vorgesehene Kappenelement ergibt sich hierbei nicht nur ein oberseitiger Abschluß des Bodenankerelementes sondern gleichzeitig auch eine entsprechende Markierung der Geländebodenoberfläche, so daß einzelne erfindungsgemäße Einrichtungen im Gelände jederzeit problemlos auffindbar sind. In der hochgehobenen, aus dem Gehäuseboden vorstehenden zweiten Stellung des Kappenelementes ist es dann einfach möglich, an dem Kappenelement eine Schnur o.dgl. temporär festzulegen, um dann mit Hilfe dieser Schnur um die erfindungsgemäße Einrichtung herum einen Kreisbogen zu schlagen und entlang dieses Kreisbogens eine gewünschte Markierung auf dem Geländeboden vorzunehmen, oder die besagte Schnur o.dgl. zwischen der Einrichtung, an welcher die Schnur temporär festgelegt ist, und einer weiteren erfindungsgemäßen Einrichtung gerade auszuspannen, um zwischen den genannten Einrichtungen auf dem Geländeboden eine gerade Linie zu markieren. Die Geländemarkierung erfolgt hierbei üblicherweise mit einem an sich bekannten Markiergerät. Nach der Durchführung der entsprechenden Gelände-Markierarbeit wird die Schnur o.dgl. wieder vom Kappenelement gelöst und entfernt, wonach das Kappenelement dann wieder von der hochgehobenen zweiten Stellung in die am Oberrand des Bodenankerelementes anliegende erste Stellung zurückbewegt werden kann. Diese Bewegung von der hochgehobenen zweiten Stellung in die abgesenkte erste Stellung kann gravitationsbedingt erfolgen. Desgleichen ist es möglich, diese Rückstellbewegung mittels eines Federelementes zu bewirken.

Bei dem Rohr für das Bodenankerelement kann es sich um ein Aluminiumrohr, ein Stahlrohr oder um ein Rohr aus einem beliebigen anderen geeigneten Material handeln. Auch ein Kunststoffrohr kann zur Anwendung gelangen. Die am unteren Endabschnitt des Rohres ausgebildete Abplattung wirkt wie eine Keilschneide, mit der das Einschlagen des Bodenankerelementes in einen Geländeboden vergleichsweise einfach und kraftsparend möglich ist. Diesem Zwecke des kraftsparenden Einschlagens des Bodenankerelementes in einen Geländeboden ist es dienlich, wenn die Abplattung mit einem mittigen Längsschlitz ausgebildet ist. die Abplattung kann mit ihrer Verbreiterung z.B. in einem Betonbett auch nach Art eines Ankers wirken.

Dadurch, daß der Zapfenabschnitt des vorzugsweise aus einem witterungsbeständigen Kunststoffmaterial bestehenden Kappenelementes einen an den lichten Innenquerschnitt des rohrförmigen Bodenankerelementes angepaßten Querschnitt aufweist und mit einem Längsschlitz ausgebildet ist, ergibt sich eine gute, linear geführte Beweglichkeit des Kappenelementes in bezug auf das Bodenankerelement zwischen der ersten und der zweiten Stellung des Kappenelementes. Durch das Kopfteil des Kappenelementes wird nicht nur die abgesenkte erste Stellung des Kappenelements in bezug auf das Bodenankerelement bestimmt, sondern gleichzeitig auch ein Festlegeabschnitt für eine Schnur o.dgl. begrenzt. Die Schnur kann einfach um den Zapfenabschnitt herumgewunden und am Zapfenabschnitt temporär festgelegt werden. Selbstverständlich ist es auch möglich, die Schnur o.dgl. durch den Längsschlitz durchzustecken und am Zapfenabschnitt des Kappenelementes temporär festzuknoten, d.h. zu befestigen.

Zur Festlegung der ersten Stellung des Kappenelementes in bezug auf das Bodenankerelement ist es zweckmäßig, wenn das Kopfteil Außenabmessungen aufweist, die größer sind als die Außenabmessungen des rohrförmigen Bodenankerelementes. Bei einer solchermaßen ausgebildeten Einrichtung überdeckt das Kopfteil das Bodenankerelement in der ersten Stellung des Kopfteiles vollständig, so daß sich ein entsprechender Schutz des Oberendes des Bodenankerelementes und gleichzeitig eine optimale Markierung der Einrichtung im entsprechenden Gelände ergibt.

Dadurch, daß das Bodenankerelement an seinem oberen Endabschnitt mit mindestens einer in den Längsschlitz des Zapfenabschnittes des Kappenelementes hineinragenden Körnung versehen ist, ergibt sich der Vorteil einer unverlierbaren Anordnung des Kappenelementes am Bodenankerelement und gleichzeitig eine definierte Festlegung der zweiten Stellung des Kappenelementes in bezug auf das Bodenankerelement. Vorzugsweise liegen sich zwei derartige Körnungen am oberen Endabschnitt des Bodenankerelementes diametral gegenüber.

Weitere Einzelheiten, Merkmale und Vorteile ergeben sich aus der nachfolgenden Beschreibung eines in der Zeichnung dargestellten Ausführungsbeispieles der erfindungsgemäßen Einrichtung zur Festlegung eines Meßpunktes in einem Gelände bzw. eines Kreisbogens um den Meßpunkt oder einer von dem Meßpunkt ausgehenden Geraden in einem Gelände. Es zeigen:
- Fig. 1: teilweise aufgeschnitten und abgeschnitten eine Ausbildung der Einrichtung in einer Seitenansicht, und
- Fig. 2: einen Schnitt entlang der Schnittlinie II-II in Fig.1 durch die Einrichtung.

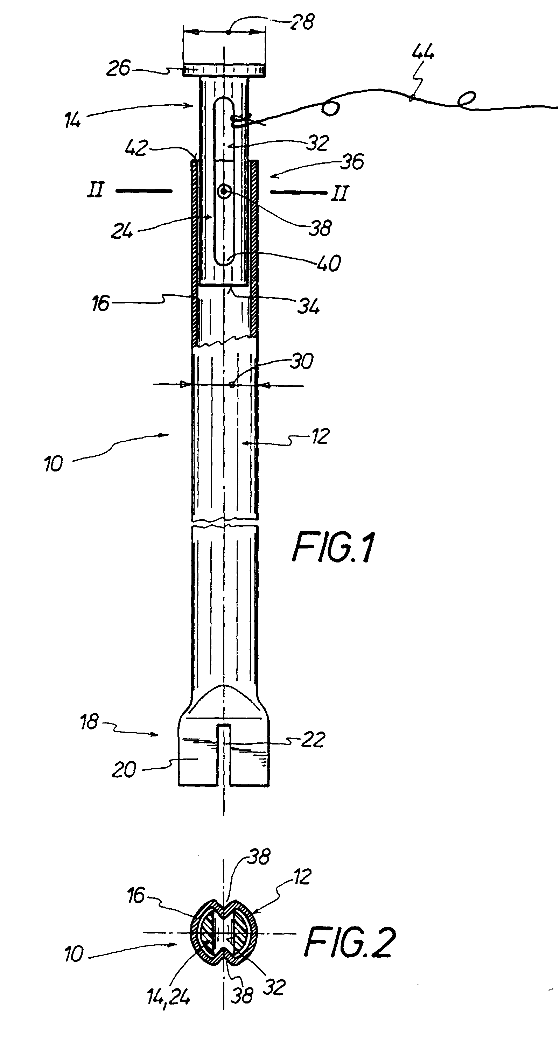

Fig. 1 zeigt unterbrochen und teilweise aufgeschnitten eine Einrichtung 10 zur Festlegung eines Meßpunktes bzw. eines Kreisbogens um den Meßpunkt oder einer von dem Meßpunkt ausgehenden Geraden in einem Gelände. Die Einrichtung 10 weist ein längliches Bodenankerelement 12 und ein Kappenelement 14 auf. Das längliche Bodenankerelement 12 ist von einem Rohr 16 gebildet, das an seinem unteren Endabschnitt 18 mit einer Abplattung 20 ausgebildet ist. Die Abplattung 20 ist mit einem mittigen Längsschlitz 22 versehen.

Das Kappenelement 14 weist einen Zapfenabschnitt 24 und ein Kopfteil 26 auf, das mit dem Zapfenabschnitt 24 einstückig verbunden ist, und das den Zapfenabschnitt 24 oberseitig abschließt. Der Zapfenabschnitt 24 des Kappenelementes 14 weist einen Querschnitt auf, der an den lichten Innenquerschnitt des als Rohr 16 ausgebildeten Bodenankerelementes 12 angepaßt ist. Das ist auch aus Fig. 2 deutlich ersichtlich, in der gleiche Einzelheiten mit denselben Bezugsziffern bezeichnet sind wie in Fig. 1.

Das Kopfteil 26 des Kappenelementes 14 weist Außenabmessungen auf, die in Fig. 1 durch den Doppelpfeil 28 angedeutet sind, und die mindestens gleich groß oder größer sind als die in Fig. 1 durch den Doppelpfeil 30 angedeuteten Außenabmessungen des rohrförmigen Bodenankerelementes 12.

Der Zapfenabschnitt 24 des Kappenelementes 14 ist mit einem Längsschlitz 32 ausgebildet, der sowohl vor dem Kopfteil 26 als auch vor dem Innenende 34 des Zapfenabschnittes 24 endet.

Das Bodenankerelement 12 ist an seinem oberen Endabschnitt 36 mit zwei sich diametral gegenüberliegenden Körnungen 38 ausgebildet, die in den diametral durchgehenden Längsschlitz 32 des Zapfenabschnittes 24 des Kappenelementes 14 hineinragen, wie aus Fig. 2 ersichtlich ist. Durch diese in den Längsschlitz 32 hineinragenden Körnungen 38 ergibt sich eine unverlierbare Anordnung des Kappenelementes 14 am Bodenankerelement 12 und eine Begrenzung der axialen Beweglichkeit des Kappenelementes 14 aus dem Bodenankerelement 12 heraus. Diese Bewegung des Kappenelementes 14 aus dem Bodenankerelement 12 heraus wird durch den unteren Endabschnitt 40 des Längsschlitzes 32 begrenzt (=zweite Stellung des Kappenelementes 14 in bezug auf das Bodenankerelement 12). In der ersten Stellung des Kappenelementes 14 liegt das Kopfteil 26 auf dem Oberende 42 des rohrförmigen Bodenankerelementes 12 an.

In der zweiten Stellung des Kappenelementes 14 ist es problemlos möglich, am Kappenelement 14 unterhalb des Kopfteiles 26 eine Schnur 44 o.dgl. temporär festzulegen, d.h. bspw. festzuknoten, um dann um die Einrichtung 10 herum im entsprechenden Gelände einen Kreisbogen schlagen und mit Hilfe einer üblichen Markiereinrichtung den Kreisbogen markieren zu können, oder die Schnur 44 von der Einrichtung 10 zu einer zweiten solchen Einrichtung 10 gerade zu spannen und dann entlang der geradegespannten Schnur o.dgl. mit Hilfe einer handelsüblichen Markiereinrichtung eine entsprechende Geländemarkierung vorzunehmen.

Die erfindungsgemäße Einrichtung kann - wie bereits erwähnt worden ist - im Sportbereich, d.h. auf Sportplätzen o.dgl. zum Einsatz gelangen; selbstverständlich kann die erfindungsgemäße Einrichtung 10 auch im Straßenbau, im Kanalbau o.dgl., d.h. im Hoch- oder Tiefbau usw. zur Anwendung gelangen.

Eine einmal in einem Geländeboden angeordnete Einrichtung 10 braucht dann nicht mehr aus dem Boden entfernt zu werden, sondern kann in diesem für allfällig notwendig werdende Markierungsarbeiten immer wieder benutzt werden, was insbes. im Sportbereich, d.h. auf Sportplätzen zweckmäßig sein kann.

## Patentansprüche

1. Einrichtung zur Festlegung eines Kreisbogens um einen Meßpunkt oder einer von dem Meßpunkt ausgehenden Geraden in einem Gelände, mit einem in den Boden des Geländes bis zu seinem Oberende (42) einzubringenden, länglichen Bodenankerelement (12) und einem am Bodenankerelement (12) angeordneten Kappenelement (14), das zwischen einer am Oberende (42) des Bodenankerelementes (12) anliegenden ersten Stellung und einer davon beabstandeten, aus dem Geländeboden vorstehenden zweiten Stellung verstellbar ist, wobei das Bodenankerelement (12) von einem Rohr (16) gebildet ist, das Kappenelement (14) einen in bezug auf das Bodenankerelement (12) verschiebebeweglichen Zapfenabschnitt (24) aufweist, der oberseitig durch ein Kopfteil (26) abgeschlossen ist, der Zapfenabschnitt (24) des Kappenelementes (14) einen an den lichten Innenquerschnitt des rohrförmigen Bodenankerelementes (12) angepaßten Querschnitt aufweist und mit einem Längsschlitz (32) ausgebildet ist, und das Bodenankerelement (12) an seinem oberen Endabschnitt (36) mit mindestens einer in den Längsschlitz (32) des Zapfenabschnittes (24) des Kappenelementes (14) hineinragenden Ansatz (38) versehen ist,
**dadurch gekennzeichnet,**
daß das Rohr (16) an seinem unteren Endabschnitt (18) mit einer Abplattung ausgebildet ist, die mit einem mittigen Längsschlitz (22) versehen ist, und daß der mindestens eine Ansatz von einer Körnung (38) gebildet ist.

2. Einrichtung nach Anspruch 1,
**dadurch gekennzeichnet,**
daß das Kopfteil (26) Außenabmessungen (28) aufweist, die mindestens gleich groß oder größer sind als die Außenabmessungen (30) des rohrförmigen Bodenankerelementes (12).

3. Einrichtung nach Anspruch 1 oder 2,
**dadurch gekennzeichnet,**
daß zwischen dem Bodenankerelement (12) und dem Kappenelement (14) zur Rückstellung des Kappenelementes (14) von seiner zweiten in seine erste Stellung ein Federelement vorgesehen ist.

## Claims

1. Device for fixing a circular arc about a measuring point, or fixing a straight line originating from the measuring point, in terrain, having an elongated ground anchor element (12) which is to be inserted up to its upper end (42) into the ground of terrain, and having a cap element (14) which is arranged on the ground anchor element (12) and can be adjusted between a first position bearing against the upper end (42) of the ground anchor element (12) and a second position which is spaced therefrom and projects from the ground of the terrain, it being the case that the ground anchor element (12) is formed by a tube (16), the cap element (14) has a pin section (24) which can be displaced with respect to the ground anchor element (12) and is closed at the top by a head part (26), the pin section (24) of the cap element (14) has a cross section adapted to the clear inside cross section of the tubular ground anchor element (12) and is constructed with a longitudinal slot (32), and the ground anchor element (12) is provided on its upper end section (36) with at least one lug (38) projecting into the longitudinal slot (32) of the pin section (24) of the cap element (14); characterized in that the tube (16) is constructed on its lower end section (18) with a flattened section which is provided with a central longitudinal slot (22); and in that the at least one lug is formed by a grain (38)

2. Device according to Claim 1, characterized in that the head part (26) has external dimensions (28) which are at least the same size or larger than the external dimensions (30) of the tubular ground anchor element (12).

3. Device according to Claim 1 or 2, characterized in that a spring element for returning the cap element (14) from its second to its first position is provided between the ground anchor element (12) and the cap element (14).

## Revendications

1. Dispositif pour la détermination, dans un terrain, d'un arc de cercle autour d'un point de mesure ou d'une ligne droite partant du point de mesure, du type se composant d'un élément d'ancrage allongé (12), susceptible d'être introduit dans le sol du terrain jusqu'à son extrémité supérieure (42) et d'un élément constituant une calotte (14) associé à l'élément d'ancrage au sol (12) et qui est réglable entre une première position dans laquelle il repose sur l'extrémité supérieure (42) de l'élément d'ancrage au sol (12), et une seconde position, écartée de la précédente, située au-dessus de la surface du terrain, l'élément d'ancrage au sol (12) consistant en un tube (16), et l'élément constituant une calotte (14) présentant une section formant pivot (24) coulissant par rapport à l'élément d'ancrage au sol (12), qui est fermé sur son côté supérieur par une tête (26), la section formant pivot (24) de l'élément constituant une calotte (14) présentant une section à la section transversale creuse de l'élément d'ancrage au sol en forme de tube (12) et comportant une fente longitudinale (32), et l'élément d'ancrage au sol (12) comportant dans sa zone terminale supérieure (36) au moins un appendice (38) dépassant dans la fente longitudinale (32) de la section pivotante (24) de l'élément constituant une calotte (14),
**caractérisé en ce que**,
le tube (16) comporte à son extrémité inférieure (18) un aplatissement qui présente une fente médiane longitudinale (22) et en ce que le ou les appendice(s) (38) consiste(nt) en un guidon.

2. Dispositif selon la revendication 1,
**caractérisé en ce que**
la tête (26) présente des dimensions extérieures (28) qui sont au moins égales ou supérieures aux dimensions extérieures (30) de l'élément d'ancrage au sol en forme de tube (12).

3. Dispositif selon la revendication 1 ou 2,
**caractérisé en ce que,**
entre l'élément d'ancrage au sol (12) et l'élément formant calotte (14) est prévu un élément élastique en vue du retour de l'élément formant calotte (14) depuis sa seconde position à sa première position.
